(19) Europäisches Patentamt / European Patent Office / Office européen des brevets

(11) **EP 4 668 936 A1**

(12) **EUROPEAN PATENT APPLICATION**
published in accordance with Art. 153(4) EPC

(43) Date of publication:
 **24.12.2025 Bulletin 2025/52**

(21) Application number: **24785063.9**

(22) Date of filing: **18.03.2024**

(51) International Patent Classification (IPC):
 *H04W 72/04* (2023.01)    *H04W 48/08* (2009.01)
 *H04L 1/18* (2023.01)    *H04W 84/06* (2009.01)
 *H04W 72/231* (2023.01)

(52) Cooperative Patent Classification (CPC):
 **H04L 1/18; H04W 48/08; H04W 72/04;**
 **H04W 72/231; H04W 84/06**

(86) International application number:
 **PCT/KR2024/003347**

(87) International publication number:
 **WO 2024/210355 (10.10.2024 Gazette 2024/41)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **05.04.2023  KR 20230044508**
 **25.04.2023  KR 20230053724**

(71) Applicant: **Samsung Electronics Co., Ltd.**
 **Suwon-si, Gyeonggi-do 16677 (KR)**

(72) Inventor: **KIM, Nohsun**
 **Suwon-si, Gyeonggi-do 16677 (KR)**

(74) Representative: **Nederlandsch Octrooibureau**
 **P.O. Box 29720**
 **2502 LS The Hague (NL)**

(54) **ELECTRONIC DEVICE FOR PERFORMING SATELLITE COMMUNICATION, AND OPERATING METHOD OF ELECTRONIC DEVICE**

(57)    This electronic device comprises a communication processor and a memory, wherein the communication processor acquires on the basis of system information block (SIB), information about a service duration time of a non-terrestrial network with which a communication connection is established, and determines, on the basis of a comparison result of the service duration time of the non-terrestrial network acquired on the basis of the SIB and a preset first time, whether to perform slot aggregation, wherein the slot aggregation refers to an operation of simultaneously scheduling a plurality of slots, and the first time can refer to the time required to complete transmission of a designated number of packets to the non-terrestrial network.

FIG. 7

```
          ┌─────────────┐
          │    START    │
          └──────┬──────┘
                 │
┌────────────────────────────────────────────┐
│ ACQUIRE, ON BASIS OF SYSTEM INFORMATION     │
│ BLOCK (SIB), INFORMATION ABOUT SERVICE      │─── 710
│ DURATION TIME OF NON-TERRESTRIAL NETWORK    │
│ WITH WHICH COMMUNICATION CONNECTION IS      │
│ ESTABLISHED                                 │
└────────────────────┬────────────────────────┘
                     │
┌────────────────────────────────────────────┐
│ DETERMINE, ON BASIS OF SERVICE DURATION     │
│ TIME OF NON-TERRESTRIAL NETWORK WITH WHICH  │─── 720
│ COMMUNICATION CONNECTION IS ESTABLISHED,    │
│ WHETHER TO APPLY SLOT AGGREGATION           │
└────────────────────┬────────────────────────┘
                     │
          ┌─────────────┐
          │     END     │
          └─────────────┘
```

**Description**

[Technical Field]

The disclosure relates to an electronic device, for example, a method of operating an electronic device for performing satellite communication.

[Background Art]

In the case of satellite communication that is a non-terrestrial network, the time to receive services from one satellite may be limited due to delay according to altitude and movement of the satellite.

In the 3GPP, an electronic device may increase a success rate of packet transmission or reception by using a hybrid automatic repeat and request (HARQ). When failing in decoding of an initially transmitted packet, the electronic device may transmit a response message (for example, negative acknowledgement (NACK)) indicating the failure of packet reception. An external electronic device receiving the response message may increase a success rate of packet transmission or reception by retransmitting the previously transmitted packet to the electronic device.

[Disclosure of Invention]

[Technical Problem]

An electronic device connected to a non-terrestrial network may support an HARQ. The electronic device connected to the non-terrestrial network may transmit or receive a packet through a relatively short time compared to a state where the connection with a terrestrial network is made. The connection with the non-terrestrial network may be released before the electronic device connected to the non-terrestrial network transmits a response message indicating failure of packet reception, and the release of the connection with the non-terrestrial network may make retransmission difficult.

An electronic device for performing satellite communication according to an embodiment of the disclosure may provide an electronic device that performs efficient communication in a situation where a non-terrestrial network having a relatively short time during which a service is provided compared to a terrestrial network is used.

An electronic device includes a communication processor and a memory, the communication processor acquires information on a service duration time of a non-terrestrial network having an established communication connection, based on a system information block (SIB) and determines whether to perform slot aggregation, based on a comparison result between the service duration time of the non-terrestrial network acquired based on the SIB and a preset first time, the slot aggregation is an operation of simultaneously performing scheduling for a plurality of slots, and the first time may be a time spent for completing transmission of a predetermined (designated) number of packets to the non-terrestrial network.

A method of operating an electronic device includes acquiring information on a service duration time of a non-terrestrial network having an established communication connection, based on a system information block (SIB) and determining whether to perform slot aggregation, based on a comparison result between the service duration time of the non-terrestrial network acquired based on the SIB and a preset first time, the slot aggregation is an operation of simultaneously performing scheduling for a plurality of slots, and the first time may be a time spent for completing transmission of a predetermined number of packets to the non-terrestrial network.

The electronic device may differently determine whether to apply slot aggregation, based on a service duration time of the non-terrestrial network having the established communication connection. In data transmission, the electronic device may reduce delay required for message transmission and reduce an error rate by applying slot aggregation, and as a result, increase a packet transmission probability within a limited time. Slot aggregation may be an operation of simultaneously performing scheduling for a plurality of slots.

When the service duration time is sufficient, the electronic device may reduce power consumption by transmitting data without applying slot aggregation.

The electronic device may reduce power consumption by transmitting data without applying slot aggregation, based on that the non-terrestrial network is detected within a predetermined distance.

[Brief Description of Drawings]

FIG. 1 is a block diagram of an electronic device within a network environment according to various embodiments.
FIG. 2 is a block diagram of an electronic device for supporting legacy network communication and 5G network communication according to various embodiments.

FIG. 3 is a diagram illustrating a protocol stack structure of the network 100 of legacy communication and/or 5G communication according to an embodiment.

FIG. 4 is a diagram illustrating an electronic device and a long-distance communication network environment according to an embodiment.

FIG. 5 is a diagram illustrating an electronic device and a cellular network according to an embodiment.

FIG. 6A is a block diagram of an electronic device according to an embodiment.

FIGS. 6B and 6C illustrate a method of transmitting a packet.

FIG. 7 is a flowchart illustrating a method of operating an electronic device according to an embodiment.

FIG. 8 is a flowchart illustrating a method of transmitting data by an electronic device according to an embodiment.

[Mode for the Invention]

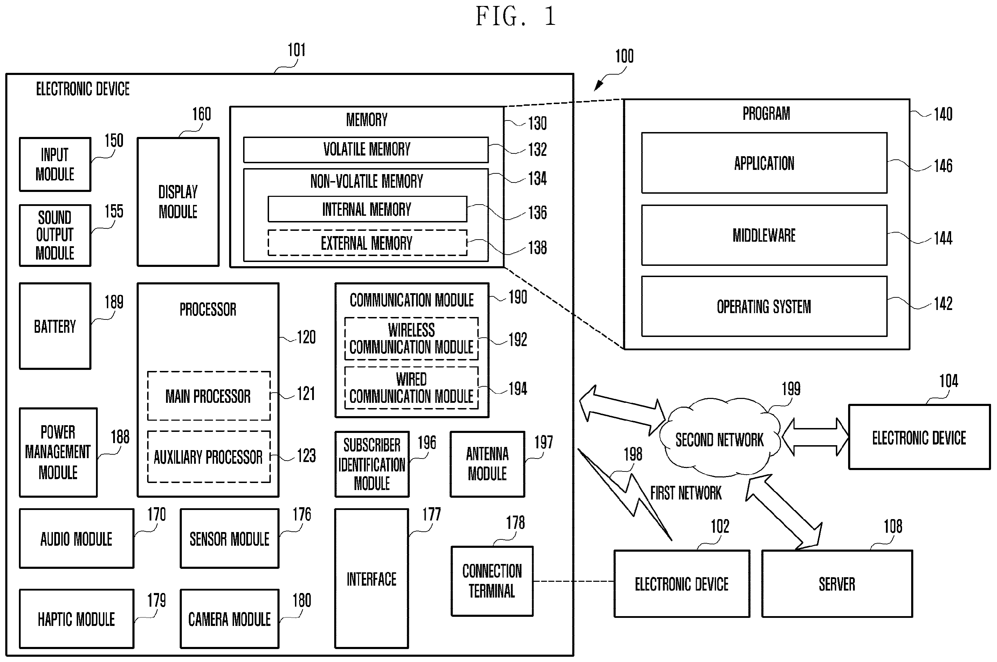

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

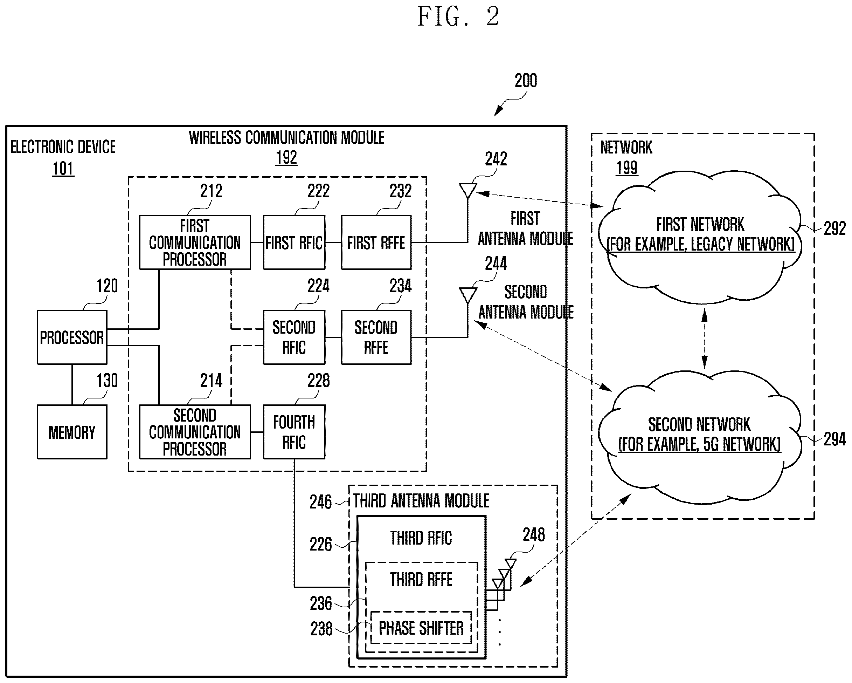

FIG. 2 is a block diagram 200 of the electronic device 101 for supporting legacy network communication and 5G network communication according to an embodiment. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and antennas 248. The electronic device 101 may further include the processor 120 and the memory 130. The network 199 may include a first network 292 and a second network 294. The first network 292 may include a terrestrial network and/or a non-terrestrial network. The second network 294 may include a terrestrial network and/or a non-terrestrial network. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may configure at least a portion of the wireless communication module 192. According to another embodiment, the fourth RFIC 228 may be omitted or may be included as a portion of the third RFIC 226.

The first communication processor 212 may support establishment of a communication channel of a band to be used for wireless communication with the first network 292 and legacy network communication through the established communication channel. According to an embodiment, the first network 292 may be a legacy network including a 2G, a 3G, a 4G, or a long-term evolution (LTE) network, but is not limited thereto. For example, the first network 292 may include a non-terrestrial network. The second communication processor 214 may support establishment of a communication channel corresponding to a predetermined band (for example, about 6 GHz to about 60 GHz) among bands to be used for wireless communication with the second network 294 and 5G network communication through the established communication channel, but is not limited thereto. For example, the second network 294 may include a non-terrestrial network. According to an embodiment, the second network 294 may be a 5G network defined in the 3GPP. In addition, according to an embodiment, the first communication processor 212 or the second communication processor 214 may support establishment of a communication channel corresponding to another predetermined band (for example, about 6 GHz or lower) among bands to be used for wireless communication with the second network 294 and 5G network communication through the established communication channel. According to an embodiment, the first communication processor 212 and the second communication processor 214 may be implemented within a single chip or a single package. According to an embodiment, the first communication processor 212 or the second communication processor 214 may be configured within a single chip or a single package with the processor 120, the auxiliary processor 123, or the communication module 190.

In transmission, the first RFIC 222 may convert a baseband signal generated by the first communication processor 212 into a radio frequency (RF) signal from about 700 MHz to about 3 GHz used for the first network 292 (for example, legacy network). In reception, the RF signal may be acquired from the first network 292 (for example, legacy network) through an antenna (for example, the first antenna module 242) and may be preprocessed through the RFFE (for example, first RFFE 232). The first RFIC 222 may convert the preprocessed RF signal into a baseband signal so that it may be processed by the first communication processor 212.

In transmission, the second RFIC 224 may convert a baseband signal generated by the first communication processor 212 or the second communication processor 214 into an RF signal (hereinafter, referred to as a 5G Sub6 RF signal) of a Sub6 band (for example, about 6 GHz or lower) used for the second network 294 (for example, the 5G network). In reception, a 5G Sub6 RF signal may be acquired from the second network 294 (for example, 5G network) through an antenna (for example, the second antenna module 244) and may be preprocessed through the RFFE (for example, second RFFE 234). The second RFIC 224 may convert the preprocessed 5G Sub6 RF signal into a baseband signal so that it may be processed by the corresponding communication processor among the first communication processor 212 or the second communication processor 214.

The third RFIC 226 may convert a baseband signal generated by the second communication processor 214 into an RF signal (hereinafter, referred to as a 5G Above6 RF signal) in a 5G Above6 band (for example, about 6 GHz to about 60 GHz) to be used for the second network 294 (for example, 5G network). In reception, a 5G Above6 RF signal may be acquired from the second network 294 (for example, 5G network) through an antenna (for example, the antenna 248) and may be preprocessed through the third RFFE 236. The third RFIC 226 may convert the preprocessed 5G Above6 RF signal into a baseband signal so that is may be processed by the second communication processor 214. According to an embodiment, the third RFFE 236 may be configured as a portion of the third RFIC 226.

The electronic device 101 may include the fourth RFIC 228 separately from the third RFIC 226 or as at least a portion thereof. In this case, after converting a baseband signal generated by the second communication processor 214 into an RF signal (hereinafter, referred to as an IF signal) in an intermediate frequency band (for example, about 9 GHz to about 11 GHz), the fourth RFIC 228 may transfer the IF signal to the third RFIC 226. The third RFIC 226 may convert the IF signal into a 5G Above6 RF signal. In reception, the 5G Above6 RF signal may be received from the second network 294 (for example, 5G network) through the antenna (for example, the antennas 248) and converted into an IF signal by the third RFIC 226. The fourth RFIC 228 may convert the IF signal into a baseband signal so that it may be processed by the second communication processor 214.

According to an embodiment, the first RFIC 222 and the second RFIC 224 may be implemented as at least a portion of a single chip or a single package. According to an embodiment, the first RFFE 232 and the second RFFE 234 may be implemented as at least a portion of a single chip or a single package. According to an embodiment, at least one of the first antenna module 242 or the second antenna module 244 may be omitted or may be combined with the other antenna module to process RF signals in a plurality of corresponding bands.

According to an embodiment, the third RFIC 226 and the antennas 248 may be disposed on the same substrate to configure the third antenna module 246. For example, the wireless communication module 192 or the processor 120 may be disposed on a first substrate (for example, main PCB). In this case, the third RFIC 226 may be disposed in a partial area (for example, bottom side) of a second substrate (for example, sub PCB) separated from the first substrate and the antennas 248 may be disposed in another partial area (for example, top side) to configure the third antenna module 246. By placing the third RFIC 226 and the antennas 248 on the same substrate, it is possible to reduce a length of a transmission line therebetween. This may reduce, for example, loss (for example, attenuation) of the signal in a high-frequency band (for example, about 6 GHz to about 60 GHz) used for 5G network communication due to a transmission line. Accordingly, the electronic device 101 may improve the quality or speed of communication with the second network 294 (for example, 5G network).

According to an embodiment, the antennas 248 may be configured as an antenna array including a plurality of antenna elements which may be used for beamforming. In this case, the third RFIC 226 is, for example, a portion of the third RFFE 236 and may include a plurality of phase shifters 238 corresponding to the plurality of antenna elements. In transmission, each of the plurality of phase shifters 238 may convert a phase of a 5G Above6 RF signal to be transmitted to the outside of the electronic device 101 (for example, a base station of the 5G network) through a corresponding antenna element. In reception, each of the plurality of phase shifters 238 may convert a phase of a 5G Above6 RF signal received from the outside through a corresponding antenna element into the same or substantially the same phase. This enables transmission or reception through beamforming between the electronic device 101 and the outside.

The second network 294 (for example, the 5G network) may operate independently from the first network 292 (for example, the legacy network) (for example, stand-alone (SA)) or may operate through a connection thereto (for example, non-stand alone (NSA)). For example, in the 5G network, only an access network (for example, a 5G radio access network (RAN) or a next generation RAN (NG RAN)) may exist without a core network (for example, a next generation core (NGC)). In this case, after accessing an access network of the 5G network, electronic device 101 may access an external network (for example, Internet) according to the control of a core network of the legacy network (for example, evolved packed core (EPC)). Protocol information (for example, LTE protocol information) for communication with the legacy network or protocol information (for example, new radio (NR) protocol information) for communication with the 5G network may be stored in the memory 230 and accessed by another component (for example, the processor 120, the first communication processor 212, or the second communication processor 214).

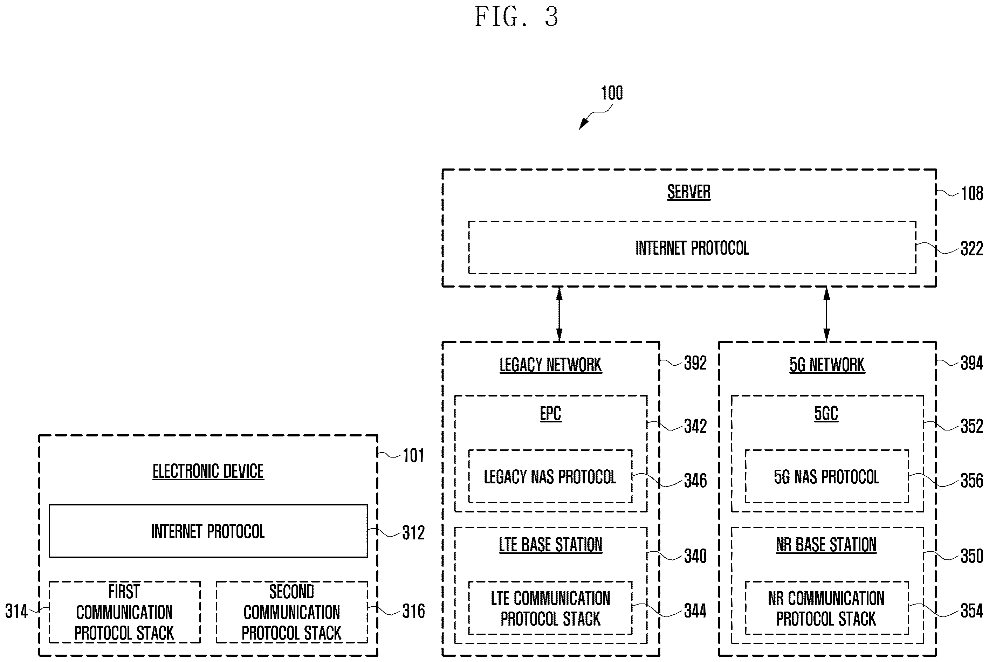

FIG. 3 is a diagram illustrating a protocol stack structure of the network 100 of legacy communication and/or 5G communication according to an embodiment.

Referring to FIG. 3, the network 100 according to the illustrated embodiment may include the electronic device 101, a legacy network 392, a 5G network 394, and the server 108.

The electronic device 101 may include an Internet protocol 312, a first communication protocol stack 314, and a second communication protocol stack 316. The electronic device 101 may communicate with the server 108 through the legacy network 392 and/or the 5G network 394.

According to an embodiment, the electronic device 101 may perform Internet communication associated with the server 108 by using the Internet protocol 312 (for example, TCP, UDP, or IP). The Internet protocol 312 may be executed by, for example, a main processor (for example, the main processor 121 of FIG. 1) included in the electronic device 101.

According to another embodiment, the electronic device 101 may perform wireless communication with the legacy network 392 by using the first communication protocol stack 314. According to another embodiment, the electronic device 101 may perform wireless communication with the 5G network 394 by using the second communication protocol stack 316. The first communication protocol stack 314 and the second communication protocol stack 316 may be executed by, for example, one or more communication processors (for example, the wireless communication module 192 of FIG. 1) included in the electronic device 101.

The server 108 may include the Internet protocol 322. The server 108 may transmit and receive data related to the Internet protocol 322 to and from the electronic device 101 through the legacy network 392 and/or the 5G network 394. According to an embodiment, the server 108 may include a cloud computing server existing outside the legacy network 392 or the 5G network 394. In another embodiment, the server 108 may include an edge computing server (or a mobile edge computing (MEC) server) located inside at least one of the legacy network or the 5G network 394.

The legacy network 392 may include an LTE base station 340 and an EPC 342. The LTE base station 340 may include an LTE communication protocol stack 344. The EPC 342 may include a legacy NAS protocol 346. The legacy network 392 may perform LTE wireless communication with the electronic device 101 by using the LTE communication protocol stack 344 and the legacy NAS protocol 346.

The 5G network 394 may include an NR base station 350 and a 5GC 352. The NR base station 350 may include an NR communication protocol stack 354. The 5GC 352 may include a 5G NAS protocol 356. The 5G network 394 may perform NR wireless communication with the electronic device 101 by using the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. The control message may include, for example, a message related to at least one of the security control, a bearer configuration, authentication, registration, or mobility management. The user data may include, for example, the remaining data except for the control message.

According to an embodiment, the control plane protocol and the user plane protocol may include physical (PHY) layer, medium access control (MAC) layer, radio link control (RLC) layer, or packet data convergence protocol (PDCP) layers. The PHY layer may perform channel coding and modulation for data received from, for example, a higher layer (for example, the MAC layer), transmit the data through a radio channel, demodulate and decode the data received through the radio channel, and transfer the data to the higher layer. The PHY layer included in the second communication protocol stack 316 and the NR communication protocol stack 354 may further perform an operation related to beamforming. The MAC layer may logically/physically map, for example, data to a radio channel to which the data is to be transmitted and received and perform a hybrid automatic repeat request (HARQ) for error correction. The RLC layer may perform, for example, data concatenation, segmentation, or reassembly, and data sequence identification, reordering, or duplication detection. The PDCP layer may perform an operation related to, for example, ciphering of a control message and user data and data integrity. The second communication protocol stack 316 and the NR communication protocol stack 354 may further include a service data adaptation protocol (SDAP). The SDAP may manage, for example, allocation of radio bearers based on the quality of service (QoS) of user data.

According to an embodiment, the control plane protocol may include a radio resource control (RRC) layer and a non-access stratum (NAS) layer. The RRC layer may process, for example, control data related to radio bearer configuration, paging, or mobility management. The NAS may process, for example, a control message related to authentication, registration, and mobility management.

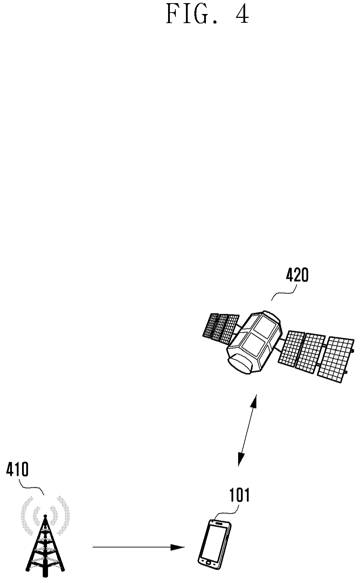

FIG. 4 is a diagram illustrating an electronic device and a long-distance communication network environment according to an embodiment.

An electronic device (for example, the electronic device 101 of FIG. 1) may transmit and/or receive data through a terrestrial network and/or a non-terrestrial network.

The terrestrial network may refer to a network capable of providing data communication through a terrestrial wireless communication device 410. For example, the terrestrial wireless communication device 410 may include a base station located on the ground (for example, fixed to the ground). The terrestrial wireless communication device 410 may support at least one communication scheme among various communication schemes supportable by the electronic device 101. For example, the terrestrial wireless communication device 410 may include an eNodeB or a gNodeB, but there is no limitation in the type thereof.

The non-terrestrial network may refer to a network capable of providing data communication through the non-terrestrial wireless communication device 420. For example, the non-terrestrial wireless communication device 420 may include at least one of various communication devices such as a base station or a relay that is not located on the ground. For example, the non-terrestrial wireless communication device 420 may include a satellite and/or an unmanned aerial vehicle, but there is not limitation in the type thereof. For example, the satellite may include a low-earth orbit (LEO) satellite, a medium-earth orbit (MEO) satellite, a geostationary earth orbit (GEO) satellite, and/or a high elliptical orbit (HEO) satellite.

The non-terrestrial wireless communication device 420 may support at least one of various wireless communication schemes. For example, the non-terrestrial wireless communication device 420 may support an NR non-terrestrial network (NTN) defined by the 3rd generation partnership project (3GPP). Alternatively, the non-terrestrial wireless communication device 420 may support a communication scheme based on various communication standards such as LTE, global system for mobile communications (GSM), and code-division multiple access (CDMA), but there is no limitation in the type thereof.

The terrestrial network and the non-terrestrial network may be networks independent from each other. Alternatively, the terrestrial network and the non-terrestrial network may be included in at least one network (for example, networks provided by the same operator) associated with each other.

When communication with the terrestrial network is not possible or not smooth, the electronic device 101 may perform wireless communication through the non-terrestrial network. Alternatively, the electronic device 101 may perform wireless communication through the non-terrestrial network regardless of a communication state with the terrestrial network according to circumstances.

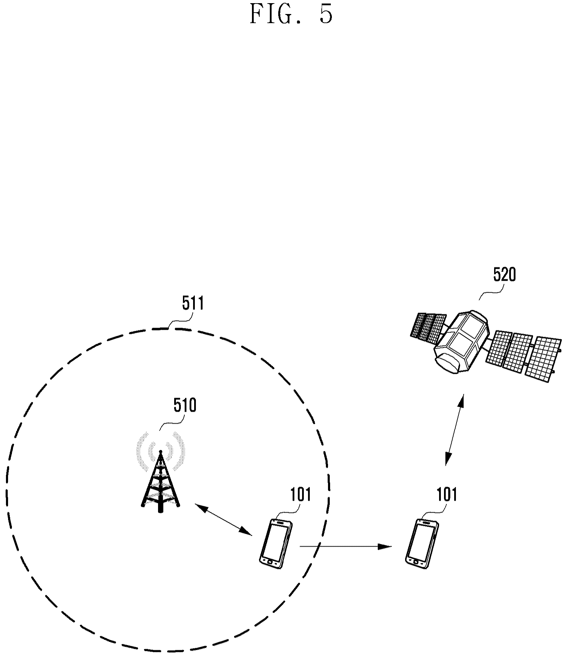

FIG. 5 is a diagram illustrating an electronic device and a cellular network according to an embodiment.

An electronic device (for example, the electronic device 101 of FIG. 1) may transmit and/or receive data through a terrestrial network and/or a non-terrestrial network.

The non-terrestrial network may refer to a network capable of providing data communication through, for example, a non-terrestrial wireless communication device 520 which is not fixed to the ground. The non-terrestrial network may use another non-terrestrial wireless communication device such as a flight vehicle as well as a satellite.

The terrestrial wireless communication device 510 may be a base station supporting first cellular communication or second cellular communication. The first cellular communication is any one communication scheme among various cellular communication schemes supportable by the electronic device (for example, the electronic device 101 of FIG. 1) and may refer to, for example, a communication scheme in the second cellular network 294 of FIG. 2. For example, the first cellular communication may be a communication scheme using a 5th generation mobile communication scheme (for example, new radio (NR)). The terrestrial wireless communication device 510 may be a base station supporting second cellular communication. The second cellular communication is any one communication scheme among various cellular communication schemes supportable by the electronic device 101 and may refer to, for example, a communication scheme in the first cellular network 292 of FIG. 2. For example, the second cellular communication may be a communication scheme using a 4th generation mobile communication scheme (for example, long-term evolution (LTE)).

The terrestrial wireless communication device 510 may transmit or receive a signal of a frequency band supported by the first cellular communication or the second cellular communication. When the electronic device 101 is connected to the terrestrial network through the terrestrial wireless communication device 510, data communication may be performed using a signal of a frequency band supported by the terrestrial wireless communication device 510.

The non-terrestrial wireless communication device 520 may serve as a base station supporting the first cellular communication or the second cellular communication. According to an embodiment, the non-terrestrial wireless communication device 520 may include a base station and/or a relay supporting the non-terrestrial network according to the standard (for example, NR-NTN) for the non-terrestrial network of the 3GPP but is not limited thereto, and may include a non-terrestrial network (for example, iridium™) that does not follow the standard for the non-terrestrial network.

The non-terrestrial wireless communication device 520 may transmit or receive a signal of a frequency band supported by the first cellular communication or the second cellular communication. When the electronic device 101 is connected to the non-terrestrial network through the non-terrestrial wireless communication device 520, data communication may be performed using a signal of a frequency band supported by the non-terrestrial wireless communication device 520.

The electronic device 101 may attempt searching for a terrestrial network to perform data communication. The electronic device 101 may identify whether to receive a signal of the frequency band supported by the terrestrial network. According to an embodiment, the electronic device 101 may receive a signal transmitted or broadcasted by the terrestrial wireless communication device 510 and determine that searching for the terrestrial network has been successful according to the quality of the signal satisfying a predetermined condition (for example, a condition that the quality of the signal is higher than or equal to a predetermined value).

When the electronic device 101 exists within the coverage 511 of the terrestrial wireless communication device 510, the electronic device 101 may succeeds in searching for the terrestrial network. The electronic device 101 may attempt registration in or access to the found terrestrial network (or the terrestrial wireless communication device 510) and transmit or receive data through the terrestrial wireless communication device 510 according to completion of the connection of the terrestrial network.

The electronic device 101 may fail in searching for the terrestrial network due to various causes. Referring to FIG. 5, as the electronic device 101 moves from the inside of the coverage 511 of the terrestrial wireless communication device 510 to the outside thereof, the connection of the terrestrial network may be released and/or the electronic device 101 may fail in searching for the terrestrial network. As the electronic device 101 moves from the inside of the coverage 511 of the terrestrial wireless communication device 510 to the outside thereof, the electronic device 101 may not receive the signal transmitted or broadcasted by the terrestrial wireless communication device 510 or, even though the signal transmitted or broadcasted by the terrestrial wireless communication device 510 is received, may determine that the searching for the terrestrial network has failed as a predetermined condition (for example, a condition that the quality of the signal is higher than or equal to a predetermined value) is not satisfied.

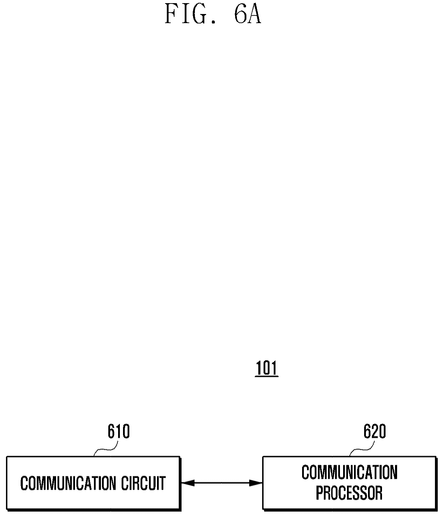

FIG. 6A is a block diagram of an electronic device according to an embodiment.

Referring to FIG. 6A, an electronic device (for example, the electronic device 101 of FIG. 1) according to various embodiments of the disclosure may include a communication circuit 610 (for example, the wireless communication module 192 of FIG. 1) and/or a communication processor 620 (for example, the processor 120 of FIG. 1, the first communication processor 212 and/or the second communication processor 214 of FIG2 ).

The communication circuit 610 is a communication circuit supporting first cellular communication and/or second cellular communication and may provide communication with an external electronic device (for example, the electronic device 104 of FIG. 1) to the electronic device 101 through the first cellular communication and/or the second cellular communication.

The communication processor 620 may be operatively connected to the communication circuit 610. The communication processor 620 may control configurations of the electronic device 101. For example, the processor 620 may control configurations of the electronic device 101 according to one or more instructions stored in a memory (for example, the memory 130 of FIG. 1).

The communication processor 620 may transmit and/or receive data through a terrestrial network (for example, the terrestrial wireless communication device 410 of FIG. 4) and/or a non-terrestrial network (for example, the non-terrestrial wireless communication device 420 of FIG. 4).

The terrestrial network may refer to a network capable of providing data communication through the terrestrial wireless communication device 410 fixed to the ground.

The non-terrestrial network may refer to a network capable of providing data communication through the non-terrestrial wireless communication device 420 which is not fixed to the ground.

The electronic device 101 may perform camp on and receive system information from a camped-on network (or cell). The network on which the electronic device 101 camped on may include a terrestrial network or a non-terrestrial network. The camp on may be an operation in which the electronic device 101 prepares for accessing the selected cell. Further, when performing the camp on, the electronic device 101 may access the network through a control channel of the camped-on cell later even in the state where a call is initialized. The electronic device 101 may perform camp on to receive a paging message. When the network receives a call for a user equipment (UE), the electronic device 101 may identify a registration area of the camped-on cell. The electronic device 101 may receive the paging message through the control channel of the cell in the registration area. The electronic device 101 may perform camp on to receive a broadcasting message of the cell.

The communication processor 620 may determine whether the found cell support the non-terrestrial network or the terrestrial network, based on information on the found cell. The information on the cell may include at least one of a mobile country code of the cell or whether the cell is a cell to which system information block (SIB) 19 is broadcasted.

According to an embodiment, system information may include SIB 19 defined in 3GPP TS. 38.304. SIB 19 is system information transmitted or broadcasted in the case of the non-terrestrial network and may include information related to the non-terrestrial network (for example, altitude information of the non-terrestrial wireless communication device (for example, the non-terrestrial wireless communication device 520 of FIG. 5) or moving speed information of the non-terrestrial wireless communication device 520). For example, a node transmitting or broadcasting SIB 19 may be a node included in the non-terrestrial network or a node supporting the non-terrestrial network. When system information transmitted or broadcasted by the non-terrestrial wireless communication device 520 is SIB 19, the communication processor 620 may identify that the found network is the non-terrestrial network. For example, when the mobile country code of the found cell is a predetermined number (for example, 9xx), the communication processor 620 may determine that the found cell is a cell supporting the non-terrestrial network. Alternatively, the communication processor 620 may determine that the found cell is the cell supporting the non-terrestrial network, based on that the found cell is a cell to which system information block (SIB) 19 is broadcasted.

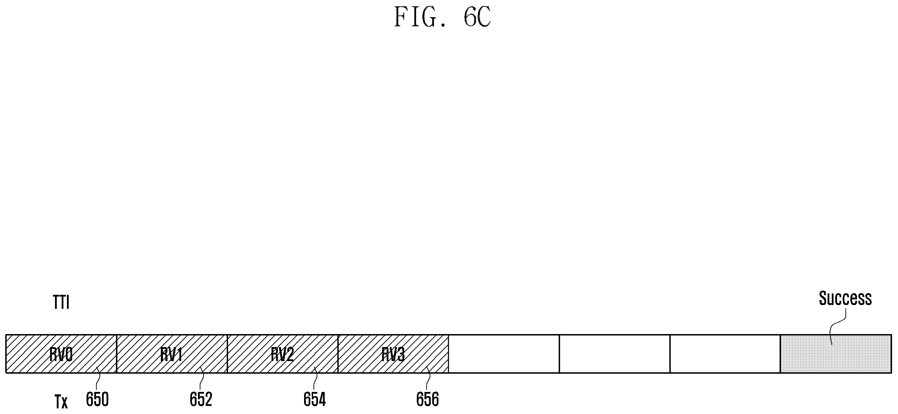

According to an embodiment, the communication processor 620 may acquire (or receive) information on a service duration time of the non-terrestrial network having an established communication connection, based on system information (system information block) and determine whether to apply slot aggregation, based on that the service duration time of the non-terrestrial network having the established communication connection is shorter than (or equal to or shorter than) a preset first time. Hereinafter, slot aggregation may be a method of performing scheduling to repeatedly transmit data, based on at least one consecutive slot intervals. A process in which the electronic device 101 transmits a packet through slot aggregation will be described with reference to FIG. 6C. The communication processor 620 may determine the service duration time of the non-terrestrial network having the established communication connection by using information on the service duration time included in the SIB. The first time is a preset time and may be, for example, 180 seconds. The size of the first time is not fixed and may vary depending on a configuration. Alternatively, the first time may refer to a time spent for completing transmission of a predetermined number of packets to the non-terrestrial network by the electronic device 101, and the first time may increase as the average number of retransmissions of the packets. The first time may refer to a time spent for completing transmission of at least one of a predetermined amount of data, the number of transport blocks, the number of code blocks, or the number of HARQ processes as well as the predetermined number of packets to the non-terrestrial network by the electronic device 101. A service duration time of the non-terrestrial network may be defined as a time for which the electronic device 101 may transmit or receive data through the non-terrestrial network. Slot aggregation may be an operation of simultaneously performing scheduling for a plurality of slots. The communication processor 620 may transmit data in units of slots when slot aggregation is not used.

According to an embodiment, the communication processor 620 may identify the location of another non-terrestrial network adjacent to the electronic device 101, based on system information, and determine whether to apply slot aggregation, based on that the other non-terrestrial network exists within a predetermined distance from the location of the electronic device 101.

Hereinafter, an operation in which the communication processor 620 determines whether to apply slot aggregation, based on the service duration time of the non-terrestrial network having the established communication connection or the location of another adjacent non-terrestrial network, will be described.

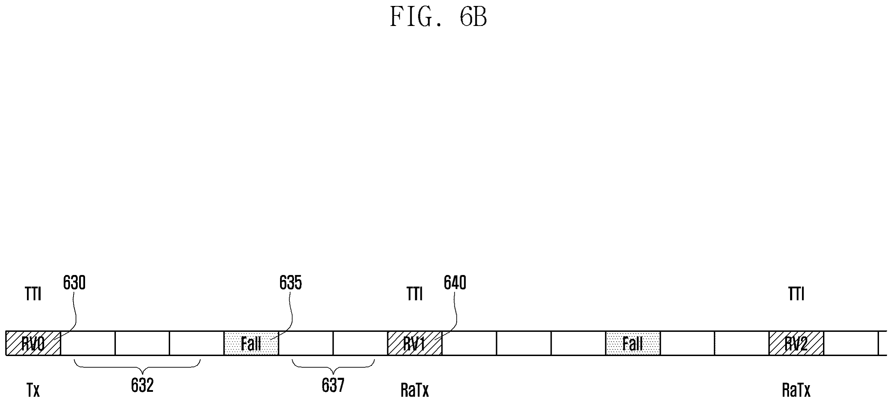

FIGS. 6B and 6C illustrate a method of transmitting a packet.

Referring to FIG. 6B, a communication processor (for example, the communication processor 620 of FIG. 6A) may transmit a first packet 630 and receive a first response 635 thereto. The communication processor 620 may determine whether the first packet 630 was transmitted based on the first response 635. The communication processor 620 may transmit a second packet 640, based on that it is determined that transmission of the first packet 630 has failed. The communication processor 620 may transmit the second packet 640 and wait for a response.

According to FIG. 6B, the communication processor 620 may experience a delay 632 while waiting for the first response 635 during a process of transmitting the packet. Further, the communication processor 620 may experience a delay 637 during a process of transmitting the second packet 640, based on the first response 635. The scheme of transmitting the packet and waiting for the response to perform retransmission as illustrated in FIG. 6B may have difficulty in guaranteeing a seamless connection since the delay is relatively large when packet transmission fails. The scheme of transmitting the packet and waiting for the response to perform retransmission may have difficulty in guaranteeing a seamless connection to a user in an environment where a retransmission rate is high like a situation where the non-terrestrial network (for example, satellite) is used.

According to FIG. 6C, the communication processor 620 may not use a scheme of first transmitting one packet and waiting a response to transmit another packet during a process of transmitting the packet. The communication processor 620 may transmit a plurality of packets 650, 652, 654, and 656 at once. The scheme of transmitting the plurality of packets 650, 652, 654, and 656 at once may include slot aggregation. Slot aggregation may be a method of performing scheduling to repeatedly transmit data, based on at least one consecutive slot intervals.

The scheme of transmitting the plurality of packets 650, 652, 654, and 656 at once as illustrated in FIG. 6C may be not efficient in terms of power in comparison with a scheme of transmitting packets one by one since the content in packets may overlap each other. However, in the environment where a retransmission rate is high like the situation where the non-terrestrial network (for example, satellite) is used, the scheme of transmitting the plurality of packets 650, 652, 654, and 656 at once has a relatively low delay according to retransmission and thus may guarantee the seamless connection to the user.

Hereinafter, a data transmission method of an electronic device (for example, the electronic device 101 of FIG. 1) for selecting any one of the packet transmission scheme of FIG. 6B or the packet transmission scheme of FIG. 6C, based on the service duration time of the non-terrestrial network and the distance from the non-terrestrial network, will be described.

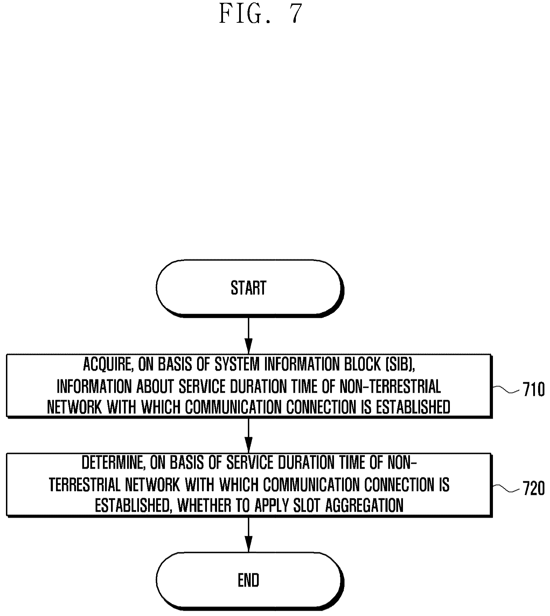

FIG. 7 is a flowchart illustrating an operation in which an electronic device searches for a network according to an embodiment.

Operations described through FIG. 7 may be implemented based on instructions that may be stored in a computer recording medium or a memory (for example, the memory 130 of FIG. 1). The illustrated method may be executed by the electronic device (for example, the electronic device 101 of FIG. 1) described above through FIGS. 1 to 6, and technical features that have been described above are omitted hereinafter. The sequences of respective operations in FIG. 7 may be changed, some operations may be omitted, and some operations may be simultaneously performed.

In operation 710, a communication processor (for example, the communication processor 620 of FIG. 6) may acquire information on a service duration time of a non-terrestrial network having an established communication connection, based on a system information block (SIB). The system information block (SIB) may be information which the electronic device 101 acquired (or received) through a base station. The system information block (SIB) may include SIB 19 defined in 3GPP TS 38.304. SIB 19 is system information transmitted or broadcasted in the case of the non-terrestrial network and may include information related to the non-terrestrial network (for example, altitude information of the non-terrestrial wireless communication device (for example, the non-terrestrial wireless communication device 520 of FIG. 5) or moving speed information of the non-terrestrial wireless communication device 520). For example, a node transmitting or broadcasting SIB 19 may be a node included in the non-terrestrial network. When system information transmitted or broadcasted by the non-terrestrial wireless communication device 520 is SIB 19, the communication processor 620 may identify that the found network is the non-terrestrial network.

According to an embodiment, the communication processor 620 may acquire information on the service duration time of the non-terrestrial network having the established communication connection, based on the system information block (SIB). The communication processor 620 may determine the service duration time of the non-terrestrial network having the established communication connection by using the information on the service duration time included in the SIB. The communication processor 620 may measure the number of retransmissions required for transmission for each piece of data (for example, packet), based on a specific time point after the system information is received, and determine an average value of the number of retransmissions, based on the number of retransmissions measured for each packet. The communication processor 620 may determine a first time, based on the average value of the number of retransmissions and a time spent for transmitting a packet one time by the electronic device 101. The first time may refer to a time spent for completing transmission of a predetermined number of packets to the non-terrestrial network by the electronic device 101, and the first time may increase as the average number of retransmissions of the packets increases. According to an embodiment, the communication processor 620 may determine the first time by using [Equation 1] below. The first time is a preset time and may have different values depending on a configuration. For example, the first time may be determined based on the average number of retransmissions of the UE required for transmitting 100 previous packets and a time spent for one transmission.

(average number of retransmissions of UE required for transmitting predetermined number of packets + 1) * RTD / c　　[Equation 1]

(RTD: round trip delay, c: speed of signal ($3*10^8$m/s))

In operation 720, the communication processor 620 may determine whether to apply slot aggregation, based on the service duration time of the non-terrestrial network having the established communication connection. The communication processor 620 may determine whether to apply slot aggregation when data is transmitted, based on the first time mentioned in operation 710. Slot aggregation may be an operation of simultaneously performing scheduling for a plurality of slots (for example, a plurality of packets transmitted when HARQ is performed). When one packet is retransmitted, the communication processor 620 may simultaneously transmit a plurality of retransmission packets to be transmitted to the non-terrestrial network. When slot aggregation is not used, the communication processor 620 may transmit data to the non-terrestrial network in units of slots. For example, when the service duration time is longer than the preset first time, the communication processor 620 may transmit data in forms of the packets 630 and 640 illustrated in FIG. 6B. The communication processor 620 may transmit data in the form of the packets 630 and 640 illustrated in FIG. 6B to relatively increase the current efficiency in comparison with the case where slot aggregation is used.

According to an embodiment, the communication processor 620 may transmit data by applying slot aggregation, based on that the service duration time of the non-terrestrial network having the established communication connection is shorter than (or equal to or shorter than) the preset first time. For example, when the service duration time is shorter than the preset first time, the communication processor 620 may transmit data in the form of the packets 650, 652, 654, and 656 illustrated in FIG. 6C. The communication processor 620 may transmit data in the form of the packets 650, 652, 654, and 656 illustrated in FIG. 6C and provide a seamless service in an environment where a retransmission rate is high.

According to an embodiment, the communication processor 620 may transmit data in units of slots without applying slot aggregation, based on that the service duration time of the non-terrestrial network having the established communication connection is longer than (or longer than or equal to) the preset first time.

According to an embodiment, the communication processor 620 may identify the location of another non-terrestrial network adjacent to the electronic device 101, based on a system information block (SIB), and determine whether to apply slot aggregation, based on that the other non-terrestrial network exists within a predetermined distance from the location of the electronic device 101.

When another non-terrestrial network (or another non-terrestrial wireless communication device 520) adjacent to the electronic device 101 exists, the communication processor 620 may perform the communication connection with the other non-terrestrial network even though the connection with the non-terrestrial network that is currently connected is released, and thus may perform enough retransmission in response to NACK. The NACK may be a message indicating that data has not been transmitted or there is an error. The base station including the non-terrestrial network may transmit the NACK to the electronic device 101 according to a data transmission situation. The communication processor 620 may retransmit data (for example, packet) again, based on reception of the NACK.

According to an embodiment, the communication processor 620 may transmit data in units of slots without applying slot aggregation, based on that the other non-terrestrial network (or another non-terrestrial wireless communication device 520) exists within a predetermined distance from the location of the electronic device 101. Even though the communication connection with the previously connected non-terrestrial network is released in the situation where the other non-terrestrial network exists within the predetermined distance from the location of the electronic device 101, the communication processor 620 may establish a communication connection with the other non-terrestrial network. The communication processor 620 may establish the communication connection with the other non-terrestrial network to transmit data. The "predetermined distance (for example, 1 km)" that is the reference for determination is not fixed, and may vary depending on a configuration. For example, the predetermined distance may be determined based on a distance within which the strength of a communication signal is higher than a predetermined level.

According to an embodiment, the communication processor 620 may change a configuration indicating whether to apply slot aggregation by using radio resource control (RRC), based on that whether to apply slot aggregation has been determined. Radio resource control (RRC) may be a layer used when the electronic device 101 and the base station establish the communication connection. An RRC message may be a broadcasting message which the base station sends to its own cell.

According to an embodiment, the communication processor 620 may change the configuration indicating whether to apply slot aggregation by using a medium access control-control element (MAC-CE), based on that whether to apply slot aggregation has been determined. The MAC-CE may be a relatively lower layer than the RRC. When transmitting data in units of packets using the MAC-CE, the communication processor 620 may relatively reduce transmission delay and more rapidly react to a response of the base station compared to the case of using the RRC.

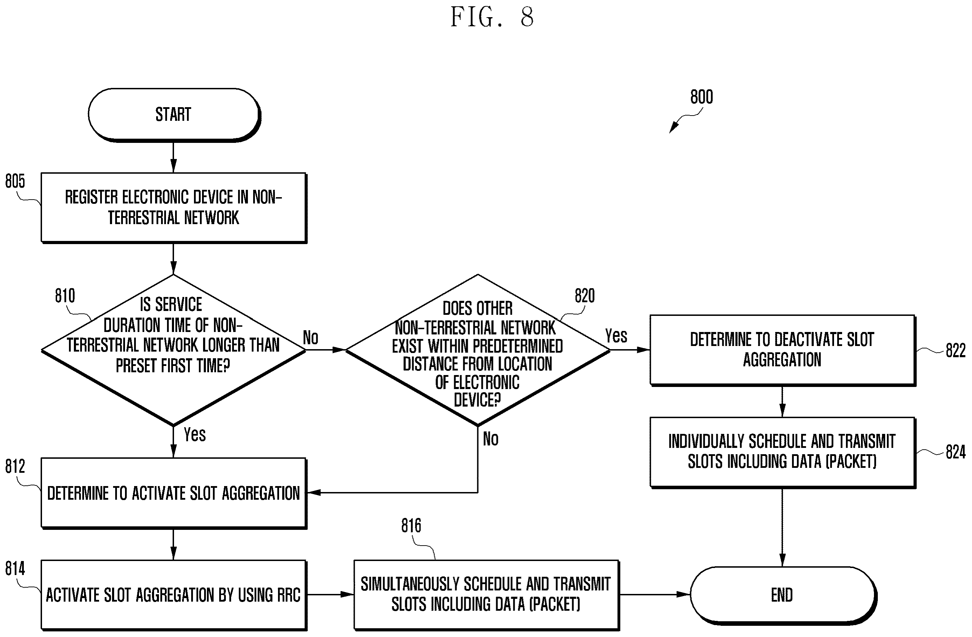

FIG. 8 is a flowchart illustrating a method of transmitting data by an electronic device according to an embodiment.

Operations 800 described through FIG. 8 may be implemented based on instructions that may be stored in a computer recording medium or a memory (for example, the memory 130 of FIG. 1). The illustrated method may be executed by the electronic device (for example, the electronic device 101 of FIG. 1) described above through FIGS. 1 to 6, and technical features that have been described above are omitted hereinafter. The sequences of respective operations in FIG. 7 may be changed, some operations may be omitted, and some operations may be simultaneously performed.

In operation 805, a communication processor (for example, the communication processor 620 of FIG. 6) may register the electronic device 101 in a non-terrestrial network. When system information transmitted or broadcasted by the non-terrestrial wireless communication device 520 is SIB 19, the communication processor 620 may identify that the searched network is the non-terrestrial network.

In operation 810, the communication processor 620 may determine whether a service duration time of the non-terrestrial network is longer than a preset first time. The first time is a preset time and may have different values depending on a configuration. The communication processor 620 may measure the number of retransmissions required for transmission for each piece of data (for example, packet), based on the current time point and determine an average value of the number of retransmissions, based on the number of retransmissions measured for each packet. The communication processor 620 may determine a first time, based on the average value of the number of retransmissions and a time spent for transmitting a packet one time by the electronic device 101.

In operation 812, the communication processor 620 may determine to activate slot aggregation, based on that the service duration time of the non-terrestrial network is longer than the preset first time (operation 810-Yes). Slot aggregation may be an operation of simultaneously performing scheduling for a plurality of slots.

In operation 814, the communication processor 620 may change the configuration indicating whether to apply slot aggregation by using radio resource control (RRC), based on that whether to apply slot aggregation has been determined. Radio resource control (RRC) may be a layer used when the electronic device 101 and the base station establish the communication connection. An RRC message may be a broadcasting message which the base station sends to its own cell. Alternatively, the communication processor 620 may change the configuration indicating whether to apply slot aggregation by using a medium access control-control element (MAC-CE), based on that whether to apply slot aggregation has been determined. The MAC-CE may be a relatively lower layer than the RRC. When transmitting data in units of packets using the MAC-CE, the communication processor 620 may relatively reduce transmission delay and more rapidly react to a response of the base station compared to the case of using the RRC.

In operation 816, the communication processor 620 may simultaneously schedule and transmit slots including data (packet).

In operation 810, the communication processor 620 may perform operation 820, based on that the service duration time of the non-terrestrial network is no longer than the preset first time (operation 810-No).

In operation 820, the communication processor 620 may identify whether there is another non-terrestrial network within a predetermined distance from the location of the electronic device. The predetermined distance may vary depending on a configuration. For example, the predetermined distance may be determined based on a distance within which the strength of a communication signal is higher than a predetermined level. When another non-terrestrial network adjacent to the electronic device 101 exists, the communication processor 620 may perform the communication connection with the other non-terrestrial network even though the connection with the non-terrestrial network that is currently connected is released, and thus may perform enough retransmission in response to NACK. The NACK may be a message indicating that data has not been transmitted or there is an error.

In operation 820, the communication processor 620 may perform operation 812, based on that it is identified that the other non-terrestrial network does not exist within the predetermined distance from the location of the electronic device (operation 820-No). In operation 812, the communication processor 620 may determine to activate slot aggregation.

In operation 820, the communication processor 620 may perform operation 822, based on that it is identified that the other non-terrestrial network exists within the predetermined distance from the location of the electronic device (operation 820-Yes). In operation 822, the communication processor 620 may determine to deactivate slot aggregation. In operation 824, the communication processor 620 may individually schedule and transmit slots including data (packets).

An electronic device includes a communication processor and a memory, the communication processor acquires information on a service duration time of a non-terrestrial network having an established communication connection, based on a system information block (SIB) and determines whether to perform slot aggregation, based on a comparison result between the service duration time of the non-terrestrial network acquired based on the SIB and a preset first time, the slot aggregation is an operation of simultaneously performing scheduling for a plurality of slots, and the first time may be a time spent for completing transmission of a predetermined number of packets to the non-terrestrial network.

The communication processor may apply the slot aggregation, based on that the service duration time of the non-terrestrial network having the established communication connection is shorter than (or equal to or shorter than) the preset first time, and transmit data.

The communication processor may transmit data in units of slots without applying the slot aggregation, based on that the service duration time of the non-terrestrial network having the established communication connection is longer than (or longer than or equal to) the preset first time.

The communication processor may identify a location of another satellite adjacent to the electronic device, based on a system information block (SIB) and determine whether to apply the slot aggregation, based on that the satellite of which the location has been identified exists within a predetermined distance from a location of the electronic device.

The communication processor may transmit data by transmitting the data in units of slots without applying the slot aggregation, based on that another satellite capable of making a communication connection with the electronic device exists within the predetermined distance from the location of the electronic device.

The communication processor may transmit an RRC reconfiguration message including data indicating whether to apply the slot aggregation to the non-terrestrial network, based on that whether to apply the slot aggregation has been determined.

The communication processor may change a configuration indicating whether to apply the slot aggregation by using a medium access control-control element (MAC-CE), based on that whether to apply the slot aggregation has been determined.

The communication processor may measure a number of retransmissions required for transmission for each packet, based on a current time point, determine an average value of the number of retransmission, based on the number of retransmission measured for each packet, and determine the first time, based on the average value of the number of retransmissions and a time spent for transmitting a packet one time by the electronic device.

The communication processor may determine an average time spent for transmitting the packet by using the non-terrestrial network by the electronic device by multiplying a value corresponding to (the average value of number of retransmissions + 1) by the time spent for transmitting the packet one time by the electronic device and determine the first time, based on the average time spent for transmitting the packet by using the non-terrestrial network by the electronic device.

A method of operating an electronic device includes an operation of acquiring information on a service duration time of a non-terrestrial network having an established communication connection, based on a system information block (SIB) and an operation of determining whether to perform slot aggregation, based on a comparison result between the service duration time of the non-terrestrial network acquired based on the SIB and a preset first time, the slot aggregation is an operation of simultaneously performing scheduling for a plurality of slots, and the first time may be a time spent for completing transmission of a predetermined number of packets to the non-terrestrial network.

**Claims**

1. An electronic device comprising:

   a communicaiton processor; and
   a memory,
   wherein the communicaiton processor is configured to:

      acquire information on a service duration time of a non-terrestrial network having an established communication connection, based on a system information block (SIB); and
      determine whether to perform slot aggregation, based on a comparison result between the service duration time of the non-terrestrial network acquired based on the SIB and a preset first time,
      wherein the slot aggregation is an operation of simultaneously performing scheduling for a plurality of slots, and
      wherein the first time is a time spent for completing transmission of a predetermined number of packets to the non-terrestrial network.

2. The electronic device of claim 1, wherein the communicaiton processor is configured to transmit data by applying the slot aggregation, based on that the service duration time of the non-terrestrial network having the established communication connection is shorter than (or equal to or shorter than) the preset first time.

3. The electronic device of claim 1, wherein the communication processor is configured to transmit data in units of slots without applying the slot aggregation, based on that the service duration time of the non-terrestrial network having the established communication connection is longer than (or longer than or equal to) the preset first time.

4. The electronic device of claim 3, wherein the communication processor is configured to:

   identify a location of another satellite adjacent to the electronic device, based on the system information block (SIB); and
   determine whether to apply the slot aggregation, based on that the satellite of which the location has been identified exists within a predetermined distance from a location of the electronic device.

**5.** The electronic device of claim 4, wherein the communication processor is configured to transmit data by transmitting the data in units of slots without applying the slot aggregation, based on that another satellite capble of making a communication connection with the electronic device exists within the predetermined distance from the location of the electronic device.

**6.** The electronic device of claim 4, wherein the communication processor is configured to transmit data by applying the slot aggregation, based on that another satelite capable of making a communication connection with the electronic device does not exist within the predetermined distance from the location of the electronic device.

**7.** The electronic device of claim 1, wherein the communication processor is configured to transmit an RRC reconfiguration message comprising data indicating whether to apply the slot aggregation to the non-terrestrial network, based on that whether to apply the slot aggregation has been determined.

**8.** The electronic device of claim 1, wherein the communication processor is configured to change a configuration indicating whether to apply the slot aggregation by using a medium access control-control element (MAC-CE), based on that whether to apply the slot aggregation has been determined.

**9.** The electronic device of claim 1, wherein the communication processor is configured to:

measure a number of retransmissions required for transmission for each packet, based on a current time point;
determine an average value of the number of retransmission, based on the number of retransmission measured for each packet; and
determine the first time, based on the average value of the number of retransmissions and a time spent for transmitting a packet one time by the electronic device.

**10.** The electronic device of claim 9, wherein the communication processor is configured to:

determine an average time spent for transmitting the packet by using the non-terrestrial network by the electronic device by multiplying (the average value of number of retransmissions + 1) by the time spent for transmititng the packet one time by the electronic device; and
determine the first time, based on the average time spent for transmitting the packet by using the non-terristrial network by the electronic device.

**11.** A method of operating an electronic device, the method comprising:

acquiring information on a service duration time of a non-terrestrial network having an established communication connection, based on a system information block (SIB); and
determining whether to perform slot aggregation, based on a comparision result between the service duration time of the non-terrestrial network acquired based on the SIB and a preset first time,
wherein the slot aggregation is an operation of simultaneously performing scheduling for a plurality of slots, and
wherein the first time is a time spent for completing transmision of a predetermined number of packets to the non-terrestrial network.

**12.** The method of claim 11, wherein the detemrining whether to apply the slot aggregation, based on that the service duration time of the non-terrestrial network having the established communication connection is shorter than (or equal to or shorter than) the preset first time further comprises transmitting data by applying the slot aggregation, based on that the service duration time of the non-terrestrial network having the established communication connection is shorter than (or equal to or shorter than) the preset first time.

**13.** The method of claim 11, wherein the detemrining whether to apply the slot aggregation, based on that the service duration time of the non-terrestrial network having the established communication connection is shorter than (or equal to or shorter than) the preset first time further comprises transmitting data in units of slots without applying the slot aggregation, based on that the service duration time of the non-terrestrial network having the established communication connection is longer than (or longer than or equal to) the preset first time.

**14.** The method of claim 13, further comprising:

identifying a location of another satellite adjacnet to the electronic device, based on the system information block (SIB); and

determining whetehr to apply the slot aggregation, based on that the satellite of which the location has been identified exists within a predetermined distance from a location of the electronic device.

15. The method of claim 14, wherein the determining of whether to apply the slot aggregation, based on that another satellite capable of making a communication connection with the electronic device exists within the predetermined distance from the location of the electronic device further comprises transmitting data in units of slots without applying the slot aggregation, based on that another non-terrestrial network exists within the predetermined distance from the location of the electronic device.

# FIG. 1

ELECTRONIC DEVICE — 101 / 100

**INPUT MODULE** 150

**SOUND OUTPUT MODULE** 155

**DISPLAY MODULE** 160

**MEMORY** 130
- VOLATILE MEMORY 132
- NON-VOLATILE MEMORY 134
  - INTERNAL MEMORY 136
  - EXTERNAL MEMORY 138

**BATTERY** 189

**POWER MANAGEMENT MODULE** 188

**PROCESSOR** 120
- MAIN PROCESSOR 121
- AUXILIARY PROCESSOR 123

**COMMUNICATION MODULE** 190
- WIRELESS COMMUNICATION MODULE 192
- WIRED COMMUNICATION MODULE 194

**SUBSCRIBER IDENTIFICATION MODULE** 196

**ANTENNA MODULE** 197

**AUDIO MODULE** 170

**SENSOR MODULE** 176

**INTERFACE** 177

**CONNECTION TERMINAL** 178

**HAPTIC MODULE** 179

**CAMERA MODULE** 180

**PROGRAM** 140
- APPLICATION 146
- MIDDLEWARE 144
- OPERATING SYSTEM 142

SECOND NETWORK 199

FIRST NETWORK 198

**ELECTRONIC DEVICE** 104

**ELECTRONIC DEVICE** 102

**SERVER** 108

EP 4 668 936 A1

# FIG. 2

200

ELECTRONIC DEVICE
101

WIRELESS COMMUNICATION MODULE
192

FIRST COMMUNICATION PROCESSOR 212

FIRST RFIC 222

FIRST RFFE 232

242 — FIRST ANTENNA MODULE

PROCESSOR 120

MEMORY 130

SECOND COMMUNICATION PROCESSOR 214

SECOND RFIC 224

SECOND RFFE 234

FOURTH RFIC 228

244 — SECOND ANTENNA MODULE

THIRD ANTENNA MODULE 246

THIRD RFIC 226

THIRD RFFE 236

PHASE SHIFTER 238

248

NETWORK
199

FIRST NETWORK
(FOR EXAMPLE, LEGACY NETWORK) — 292

SECOND NETWORK
(FOR EXAMPLE, 5G NETWORK) — 294

EP 4 668 936 A1

FIG. 3

100

SERVER — 108

INTERNET PROTOCOL — 322

LEGACY NETWORK — 392

5G NETWORK — 394

EPC — 342

5GC — 352

LEGACY NAS PROTOCOL — 346

5G NAS PROTOCOL — 356

ELECTRONIC DEVICE — 101

INTERNET PROTOCOL — 312

LTE BASE STATION — 340

NR BASE STATION — 350

314 — FIRST COMMUNICATION PROTOCOL STACK

SECOND COMMUNICATION PROTOCOL STACK — 316

LTE COMMUNICATION PROTOCOL STACK — 344

NR COMMUNICATION PROTOCOL STACK — 354

EP 4 668 936 A1

FIG. 4

# FIG. 5

FIG. 6A

101

| 610 | | 620 |
|-----|--|-----|
| COMMUNICATION CIRCUIT | ←→ | COMMUNICATION PROCESSOR |

EP 4 668 936 A1

# FIG. 6B

# FIG. 6C

FIG. 7

START

ACQUIRE, ON BASIS OF SYSTEM INFORMATION BLOCK (SIB), INFORMATION ABOUT SERVICE DURATION TIME OF NON-TERRESTRIAL NETWORK WITH WHICH COMMUNICATION CONNECTION IS ESTABLISHED — 710

DETERMINE, ON BASIS OF SERVICE DURATION TIME OF NON-TERRESTRIAL NETWORK WITH WHICH COMMUNICATION CONNECTION IS ESTABLISHED, WHETHER TO APPLY SLOT AGGREGATION — 720

END

## FIG. 8

START

805 REGISTER ELECTRONIC DEVICE IN NON-TERRESTRIAL NETWORK

810 IS SERVICE DURATION TIME OF NON-TERRESTRIAL NETWORK LONGER THAN PRESET FIRST TIME?

No → 820 DOES OTHER NON-TERRESTRIAL NETWORK EXIST WITHIN PREDETERMINED DISTANCE FROM LOCATION OF ELECTRONIC DEVICE?

Yes → 822 DETERMINE TO DEACTIVATE SLOT AGGREGATION

824 INDIVIDUALLY SCHEDULE AND TRANSMIT SLOTS INCLUDING DATA (PACKET)

810 Yes ↓

812 DETERMINE TO ACTIVATE SLOT AGGREGATION

820 No ↓

814 ACTIVATE SLOT AGGREGATION BY USING RRC

816 SIMULTANEOUSLY SCHEDULE AND TRANSMIT SLOTS INCLUDING DATA (PACKET)

END

800

EP 4 668 936 A1

## INTERNATIONAL SEARCH REPORT

International application No.

**PCT/KR2024/003347**

**A. CLASSIFICATION OF SUBJECT MATTER**

**H04W 72/04**(2009.01)i; **H04W 48/08**(2009.01)i; **H04L 1/18**(2006.01)i; **H04W 84/06**(2009.01)i; **H04W 72/231**(2023.01)i

According to International Patent Classification (IPC) or to both national classification and IPC

**B. FIELDS SEARCHED**

Minimum documentation searched (classification system followed by classification symbols)

H04W 72/04(2009.01); H04L 1/18(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 슬롯(slot), 어그리게이션(aggregation), SIB(system information block)

**C. DOCUMENTS CONSIDERED TO BE RELEVANT**

| Category* | Citation of document, with indication, where appropriate, of the relevant passages | Relevant to claim No. |
|---|---|---|
| A | WO 2019-147830 A2 (QUALCOMM INCORPORATED) 01 August 2019 (2019-08-01) See paragraphs [0092]-[0094]. | 1-15 |
| A | US 2021-0028899 A1 (MEDIATEK SINGAPORE PTE. LTD.) 28 January 2021 (2021-01-28) See claims 1-10. | 1-15 |
| A | KR 10-2023-0028277 A (QUALCOMM INCORPORATED) 28 February 2023 (2023-02-28) See paragraphs [0070]-[0071]. | 1-15 |
| A | WO 2018-031623 A1 (INTEL CORPORATION) 15 February 2018 (2018-02-15) See page 13, line 17-page 14, line 20. | 1-15 |
| A | XIA, Fanghao et al. Adaptive Aggregated Multi-Process Transmission for LEO Satellites Integrated with 5G. 2022 IEEE/CIC International Conference on Communications in China (ICCC Workshops). 04 October 2022. See sections I-V. | 1-15 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 June 2024** | **19 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/003347**

| Patent document cited in search report | | | Publication date (day/month/year) | Patent family member(s) | | | Publication date (day/month/year) |
|---|---|---|---|---|---|---|---|
| WO | 2019-147830 | A2 | 01 August 2019 | CN | 111670550 | A | 15 September 2020 |
| | | | | CN | 111670550 | B | 16 June 2023 |
| | | | | EP | 3744024 | A2 | 02 December 2020 |
| | | | | TW | 201933932 | A | 16 August 2019 |
| | | | | TW | I805681 | B | 21 June 2023 |
| | | | | US | 11737059 | B2 | 22 August 2023 |
| | | | | US | 2019-0230656 | A1 | 25 July 2019 |
| | | | | US | 2023-0345434 | A1 | 26 October 2023 |
| | | | | WO | 2019-147830 | A3 | 21 November 2019 |
| US | 2021-0028899 | A1 | 28 January 2021 | CN | 112291167 | A | 29 January 2021 |
| | | | | US | 11895046 | B2 | 06 February 2024 |
| KR | 10-2023-0028277 | A | 28 February 2023 | CN | 115702557 | A | 14 February 2023 |
| | | | | EP | 4173189 | A1 | 03 May 2023 |
| | | | | US | 11843467 | B2 | 12 December 2023 |
| | | | | US | 2021-0409169 | A1 | 30 December 2021 |
| | | | | WO | 2021-263117 | A1 | 30 December 2021 |
| WO | 2018-031623 | A1 | 15 February 2018 | None | | | |

Form PCT/ISA/210 (patent family annex) (July 2022)